(19) Europäisches Patentamt / European Patent Office / Office européen des brevets

(11) **EP 4 443 313 A1**

(12) **EUROPEAN PATENT APPLICATION**
published in accordance with Art. 153(4) EPC

(43) Date of publication:
**09.10.2024 Bulletin 2024/41**

(21) Application number: **22899911.6**

(22) Date of filing: **15.07.2022**

(51) International Patent Classification (IPC):
**G06F 16/36** (2019.01)

(52) Cooperative Patent Classification (CPC):
**G06F 16/36; G06V 10/74; G06V 10/762;**
**Y02D 10/00**

(86) International application number:
**PCT/CN2022/105891**

(87) International publication number:
**WO 2023/098091 (08.06.2023 Gazette 2023/23)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **02.12.2021 CN 202111458493**

(71) Applicant: **Zhejiang Uniview Technologies Co., Ltd.**
**Hangzhou, Zhejiang 310051 (CN)**

(72) Inventors:
• **LIU, Qinglian**
**Hangzhou, Zhejiang 310051 (CN)**
• **FU, Xiao**
**Hangzhou, Zhejiang 310051 (CN)**

(74) Representative: **HGF**
**HGF Limited**
**1 City Walk**
**Leeds LS11 9DX (GB)**

(54) **ENTITY IMAGE CLUSTERING PROCESSING METHOD AND APPARATUS, ELECTRONIC DEVICE AND STORAGE MEDIUM**

(57) Provided are an entity image clustering processing method and apparatus, an electronic device and a storage medium. The method includes: configuring an entity relationship between any two entity images, which are suspected to have the same entity, in an entity image sequence to obtain an entity triple; topologically connecting any two entity triples, which share the same entity relationship, through the entity relationship between two entity images in each of the two entity triples to construct at least one entity relationship graph; and segmenting at least one relationship sub-graph from the at least one entity relationship graph according to an affinity between entity images in the at least one entity relationship graph.

FIG. 1

**Description**

This application claims priority to Chinese Patent Application No. 202111458493.X filed with the China National Intellectual Property Administration (CNIPA) on Dec. 2, 2021, the content of which is incorporated herein by reference in its entirety.

TECHNICAL FIELD

Embodiments of the present application relate to the field of image processing technology, for example, an entity image clustering processing method and apparatus, an electronic device and a storage medium.

BACKGROUND

With the rapid development of the video surveillance industry, face clustering has been widely applied. For example, portraits are processed by a clustering algorithm or a sorting algorithm to cluster and profile the trajectory images of the same person, and then data analysis such as wandering warning and companion judgement is performed on the image profile of each person.

In the related art, portrait clustering is generally as follows: a face similarity, a body similarity and a gait similarity in a portrait are calculated, multiplied by a preset face weight value, a preset body weight value and a preset gait weight value, respectively, and then summed to obtain a comprehensive similarity, and the portrait whose comprehensive similarity exceeds a threshold is clustered into one class. However, at present, only face recognition is accurate, body recognition and gait recognition as well as comparison algorithms are still in the research and experimental stage, so if clustering analysis is performed only based on faces, bodies and gaits in images, a certain error may be caused.

SUMMARY

Embodiments of the present application provide an entity image clustering processing method and apparatus, an electronic device and a storage medium.

In a first aspect, the embodiments of the present application provide an entity image clustering processing method. The method includes the following.

An entity relationship is configured between any two entity images, which are suspected to have the same entity, in an entity image sequence to obtain an entity triple.

Any two entity triples sharing the same entity relationship are topologically connected through the entity relationship between two entity images in each of the two entity triples, to construct at least one entity relationship graph.

At least one relationship sub-graph is segmented from the at least one entity relationship graph according to an affinity between entity images in the at least one entity relationship graph, where entity images in each relationship sub-graph correspond to the same entity.

In a second aspect, the embodiments of the present application further provide an entity image clustering processing apparatus. The apparatus includes an image configuration module, a relationship graph generation module and a relationship graph processing module.

The image configuration module is configured to configure an entity relationship between any two entity images, which are suspected to have the same entity, in an entity image sequence to obtain an entity triple.

The relationship graph generation module is configured to topologically connect any two entity triples, which share the same entity relationship, through the entity relationship between two entity images in each of the two entity triples to construct at least one entity relationship graph.

The relationship graph processing module is configured to segment at least one relationship sub-graph from the at least one entity relationship graph according to an affinity between entity images in the at least one entity relationship graph, where entity images in each relationship sub-graph correspond to the same entity.

In a third aspect, the embodiments of the present application further provide an electronic device. The electronic device includes at least one processor and a storage apparatus.

The storage apparatus is configured to store at least one program.

The at least one program, when executed by the at least one processor, causes the at least one processor to implement the entity image clustering processing method provided in any of embodiments of the present application.

In a fourth aspect, the embodiments of the present application further provide a computer-readable storage medium. The computer-readable storage medium is configured to store a computer program, where the computer program, when executed by a processor, causes the processor to implement the entity image clustering processing method provided in any of embodiments of the present application.

The above description is only an overview of the embodiments of the present application. In order to better understand the technical means of the present application, the present application may be implemented in accordance with the content of the specification. These and other objects, features and advantages of the present application will be more apparent from specific embodiments of the present application described below.

BRIEF DESCRIPTION OF DRAWINGS

Other features, objects and advantages of the present application will become more apparent by reading the description of the non-limiting embodiments with reference to the following drawings. The drawings are merely for the purpose of illustrating the implementations and are not to be construed as limiting the present application. Moreover, like reference numerals refer to like parts throughout the drawings. In the drawings:

FIG. 1 is a flowchart of an entity image clustering processing method according to an embodiment of the present application;

FIG. 2 illustrates an entity triple relationship graph according to an embodiment of the present application;

FIG. 3 illustrates an entity relationship graph according to an embodiment of the present application;

FIG. 4 illustrates an entity relationship graph with an abnormal topological connection deleted according to an embodiment of the present application;

FIG. 5 is a flowchart of another entity image clustering processing method according to an embodiment of the present application;

FIG. 6 illustrates an entity relationship graph that meets a second similarity condition according to an embodiment of the present application;

FIG. 7 illustrates a final segmentation diagram of an entity relationship graph according to an embodiment of the present application;

FIG. 8 is a block diagram of an entity image clustering processing apparatus according to an embodiment of the present application; and

FIG. 9 is a structure diagram of an electronic device according to an embodiment of the present application.

DETAILED DESCRIPTION

The present application will be described below in conjunction with drawings and embodiments. It is to be understood that the embodiments set forth below are only intended to illustrate the present application, rather than limiting the present application. Additionally, it is also to be noted that for ease of description, only part, not all, of structures related to the present application are illustrated in the drawings.
Before example embodiments are discussed in more detail, some of the example embodiments are described as processes or methods depicted in flowcharts. Although the flowcharts describe the operations (or steps) as sequential processes, many of the operations may be implemented concurrently, coincidently or simultaneously. Additionally, the sequence of the operations may be rearranged. A process may be terminated when its operations are completed, but may further have additional steps not included in the drawings. The process may correspond to one of a method, a function, a procedure, a subroutine, a subprogram, etc.

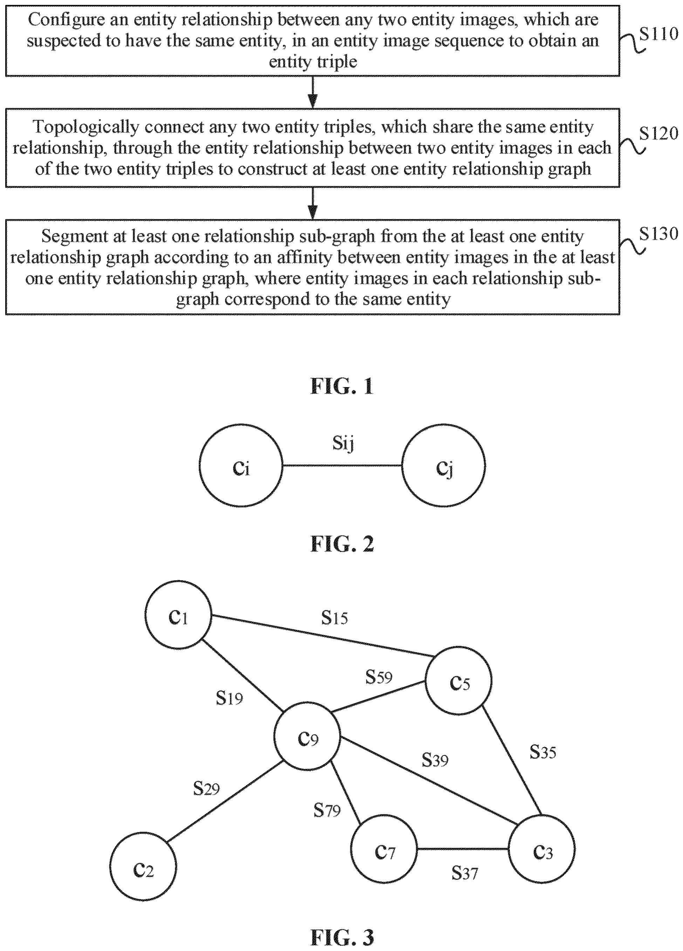

FIG. 1 is a flowchart of an entity image clustering processing method according to an embodiment of the present application. In this embodiment, a batch of entity images may be clustered according to the similarity and the affinity between entity images. The method may be executed by an entity image clustering processing apparatus, and the apparatus may be implemented by software and/or hardware and may be integrated into an electronic device having a network communication function. As shown in FIG. 1, the entity image clustering processing method provided in this embodiment of the present application may include steps S110 to S130.
In S110, an entity relationship is configured between any two entity images, which are suspected to have the same entity, in an entity image sequence to obtain an entity triple.
An entity may refer to a photography subject that is photographed by a surveillance device. The entity may be, for example, a person, an animal, a plant, a house or a car. An entity image may refer to an image that contains an entity subject and that is photographed by a surveillance device. The entity image may be, for example, a portrait image, an animal image, a plant image, a house image or a car image. Multiple entity images form one entity image sequence. Taking a portrait image as an example, the portrait image may include information such as a face, a body and a gait.

In this embodiment, being suspected to have the same entity is used for characterizing the possibility that the two entity images contain the same entity, and being suspected to have the same entity may include that two entity images have the same entity and that there is a certain possibility that two entity images have the same entity. In other words, being suspected to have the same entity may indicate the possibility of having the same entity but it is not one hundred percent confirmed that the two entity images must have the same entity.

The entity relationship mentioned in this embodiment may refer to an image relationship between entity images and may be represented, for example, by an inter-image similarity between entity images. For example, after a pair of any two entity images suspected to have the same entity is selected from an entity image sequence, an entity relationship may be configured between the two entity images, and the two entity images configured with the entity relationship are taken as an entity triple. In a similar fashion, the process of selecting any two entity images suspected to have the same entity and configuring an entity relationship is repeated to obtain at least two entity triples. Each entity triple characterizes an entity relationship combination between two entity images suspected to have the same entity.

In one embodiment, the step where an entity relationship is configured between any two entity images, which are suspected to have the same entity, in an entity image sequence to obtain an entity triple may include steps A1 and A2.

In step A1, an inter-image similarity between any two entity images in the entity image sequence is determined.

In step A2, two entity images whose inter-image similarity meets a first similarity condition are taken as the two entity images suspected to have the same entity, and one entity relationship is configured between the two entity images to obtain the corresponding entity triple.

The first similarity condition is used for screening out any two entity images that do not contain the same entity.

In this embodiment, the step where an inter-image similarity between any two entity images in the entity image sequence is determined may include the following steps: a feature vector of each entity image in at least one entity image in the entity image sequence is extracted, a pairwise cross-comparison is performed on the feature vector of each entity image in the at least one entity image, and an image feature similarity between feature vectors of any two entity images is calculated to obtain a feature similarity matrix, where each element in the feature similarity matrix is a similarity between two entity images.

For example, according to a face image set collected by a surveillance device, a face feature vector set C = $\{c_1, c_2 ... , c_i ... \}$ is obtained through a visual recognition algorithm, where $i$ is a natural number greater than 0.

Further, the image feature similarity is calculated by performing a pairwise cross-comparison on the face feature

$$M = \begin{pmatrix} s_{11} & \cdots & s_{1n} \\ \vdots & \ddots & \vdots \\ s_{n1} & \cdots & s_{nn} \end{pmatrix}$$

vector set C to obtain a feature similarity matrix $\quad$ , where each element in the matrix is the similarity between two face images.

The inter-image similarity may be determined in a variety of methods. The common methods for comparing image similarities include a histogram method, image template matching, a peak signal-to-noise ratio (PSNR), a structural similarity (SSIM), a perceptual hashing algorithm, a scale-invariant feature transform algorithm and the like.

In this embodiment, the first similarity condition may be achieved by setting a first similarity threshold $s_1$, and the preliminary screening for portrait clustering may be achieved through the first similarity threshold $s_1$. The magnitude of $s_1$ is not specifically limited here and may be flexibly set according to the actual application requirements. The first similarity condition may be that the inter-image similarity is greater than the first similarity threshold $s_1$ and is used for screening out two entity images that do not contain the same entity.

After the inter-image similarity between any two entity images in the entity image sequence is obtained, the inter-image similarities between two entity images may be sequentially compared with the first similarity threshold $s_1$ indicated by the first similarity condition. Through the similarity comparison, the two entity images whose inter-image similarity is less than the first similarity threshold may be explicitly determined as entity images that do not correspond to the same entity. Two entity images whose inter-image similarity is greater than the first similarity threshold cannot be explicitly determined and may only be determined as two entity images suspected to have the same entity, and further determination needs to be performed on the two entity images.

If an element in the similarity matrix is greater than the first similarity threshold $s_1$, that is, when an inter-image similarity meets the first similarity condition, two entity images corresponding to the element are taken as two entity images suspected to have the same entity, and an entity triple $T(c_i, c_j, s_{ij})$ is formed by configuring an entity relationship between the two entity images. If no element that is greater than the first similarity threshold $s_1$ exists in the similarity matrix, that is, when no inter-image similarity meets the first similarity condition, it is indicated that the captured entity image sequence does not belong to the same entity, the entity images then cannot be clustered, and thus, the entity image sequence is directly discarded.

As shown in FIG. 2 which illustrates an entity triple relationship graph, $c_i$ and $c_j$ serve as vertices and denote two entity images suspected to have the same entity, and $s_{ij}$ serves as an edge and denotes the entity relationship between the two entity images. Each entity triple $T(c_i,c_j,s_{ij})$ can form an entity triple relationship graph with two vertices that are connected by a similarity relationship. The similarity comparison process described above is performed on each element in the similarity matrix. When an element meets the first similarity condition, two entity images corresponding to the element are taken as two entity images suspected to have the same entity, and an entity relationship is configured between the two entity images. Finally, at least two entity triples may be obtained, that is, at least two entity triple relationship graphs may correspondingly obtained.

In S120, any two entity triples sharing the same entity relationship are topologically connected through the entity relationship between two entity images in each of the two entity triples, to construct at least one entity relationship graph.

In this embodiment, the entity triple relationship graphs obtained after the screening is performed using the first similarity threshold $s_1$ are connected by edges to construct an entity relationship graph. For example, at least one entity relationship graph is constructed by mapping an entity image to a graph node and mapping an entity relationship corresponding to any two graph nodes to a topological connection between the two graph nodes. As shown in FIG. 3 which illustrates an entity relationship graph according to an embodiment of the present application, $c_i$ denotes a graph node, $c_j$ denotes another graph node, and $s_{ij}$ denotes the topological connection between the two graph nodes. For example, $c_1$ and $c_9$ are two different graph nodes, and $s_{19}$ is the topological connection between $c_1$ and $c_9$.

In one example, to facilitate the understanding of any two entity triples sharing the same entity relationship, in FIG. 3, "$c_1$-$s_{19}$-$c_9$" is one entity triple, "$c_1$-$s_{15}$-$c_5$" is another entity triple, and these two entity triples intersect at the graph node $c_1$. In this illustrative example, sharing the same entity relationship may be understood as sharing a graph node $c_1$, but the manner of sharing the same entity relationship is not limited to such relationship types.

In S130, at least one relationship sub-graph is segmented from the at least one entity relationship graph according to an affinity between entity images in the at least one entity relationship graph, where entity images in each relationship sub-graph correspond to the same entity.

In this embodiment, the affinity between entity images may indicate a degree of close connection between the entity images and may be expressed as a numerical value. The larger the value of the affinity is, the closer the connection between entity images is, and the greater the probability that two entity images have the same entity is. Conversely, the smaller the value of the affinity is, the farther the connection between two entity images is, and the smaller the probability that two entity images have the same entity is. Therefore, a probability that entity images in the entity relationship graph has the same entity may be quantitatively determined according to the affinity between the entity images in the entity relationship graph. The entity relationship graph may be segmented into at least one relationship sub-graph by splitting an entity image that does not have a sufficient affinity away from the entity relationship graph. The entity images of each relationship sub-graph correspond to the same entity.

According to the entity image clustering processing method provided in this embodiment of the present application, entity images are preliminarily screened using the set first similarity threshold to obtain entity images suspected to have the same entity, the entity images suspected to have the same entity are further screened by calculating the affinity between entity images, and entity images with an insufficient affinity are deleted on the basis of the preliminary screening and construction of the entity images, thereby achieving the clustering analysis of entity images corresponding to different entities, improving the accuracy of clustering and segmentation, and enhancing the clustering effect on entity images.

On the basis of the embodiments described above, in one embodiment, the process of constructing at least one entity relationship graph provided in this embodiment may further include steps B 1 and B2.

In step B 1, a spatio-temporal conformity between two topologically connected entity images in the constructed entity relationship graph is determined.

The spatio-temporal conformity is determined through the ratio of an actual acquisition time difference to a theoretical acquisition time difference of two entity images.

In step B2, a topological connection between two entity images whose spatio-temporal conformity does not meet a preset spatio-temporal conformity condition is deleted from the constructed entity relationship graph.

In one embodiment, the step where a spatio-temporal conformity between two topologically connected entity images in the constructed entity relationship graph is determined may include the following steps: an actual acquisition time difference of the two topologically connected entity images in the constructed entity relationship graph is determined, a theoretical travel route of an entity in the two topologically connected entity images and a theoretical travel speed of the entity in the two topologically connected entity images are determined, the ratio of a spatial distance of the theoretical travel route of the entity to the theoretical travel speed of the entity is taken as a theoretical acquisition time difference of the two entity images, and the ratio of the actual acquisition time difference to the theoretical acquisition time difference is determined as the spatio-temporal conformity between the two topologically connected entity images. The spatio-temporal conformity is used for characterizing the degree of difference between the actual acquisition time difference and the theoretical acquisition time difference of two entity images.

In this embodiment, a person may travel in different modes of transport, for example, may walk, ride a bicycle, ride an electric bicycle, take a bus or take the subway, and each travel mode has a reasonable driving speed. When the travel mode of a person needs to be determined, the travel mode may be resolved through a visual recognition algorithm or may be analyzed by collecting a device label such as "Subway Entrance" and "Bus Station".

In this embodiment, the travel mode between any two graph nodes in the entity relationship graph is analyzed through a visual algorithm or by collecting a device label, the normal time required for the travel mode is calculated according to road network data, and the spatio-temporal conformity of the two graph nodes is calculated through the

formula $ps = \dfrac{\left| \dfrac{t_i - t_j}{s/v} \right|}{}$ .

In the above formula, $ps$ denotes a spatio-temporal conformity, $t_i$ denotes an acquisition time of an portrait image $c_i$, $t_j$ denotes an acquisition time of an portrait image $c_j$, $s$ denotes a spatial distance between $c_i$ and $c_j$ calculated according to the road network data, $v$ is a travel speed between $c_i$ and $c_j$ speculated according to a travel mode and a spatial distance, $t_i - t_j$ denotes an actual acquisition time difference between two entity images, and $s / v$ denotes a theoretical acquisition time difference between two entity images.

When the spatio-temporal conformity is calculated through the above formula, an actual acquisition time difference $t_i - t_j$ of two topologically connected entity images in the entity relationship graph is determined, a theoretical travel route of the entity in the two topologically connected entity images and a theoretical travel speed $v$ of the entity in the two topologically connected entity images are determined, the ratio $s / v$ of the spatial distance $s$ of the theoretical travel route of the entity to the theoretical travel speed $v$ of the entity is taken as a theoretical acquisition time difference of the two entity images, and the ratio of the actual acquisition time difference to the theoretical acquisition time difference is determined as the spatio-temporal conformity between the two topologically connected entity images.

In one example, a road network refers to a road system composed of various roads that are interconnected and interwoven into a mesh in a certain region and can be provided for a variety of means of transport to calculate an optimal transit trajectory.

In one application scenario, a reasonable transport trajectory may be speculated mainly according to the road network and the means of transport, and targets that do not conform to the transport trajectory may be deleted, thereby improving the accuracy of the clustering.

In one embodiment, abnormal topological connections in the entity relationship graph may be deleted by setting a threshold $p$. The delete of abnormal topological connections may be used for deleting the topological connection between graph nodes corresponding to two entity images that are determined incorrectly to have the same entity relationship in the entity relationship graph. The magnitude of $p$ is not specifically limited here and may be flexibly set according to the actual application requirements. The calculated spatio-temporal conformity $ps$ is compared with the threshold $p$. If $ps$ exceeds $p$ (an example of the spatio-temporal conformity not meeting the preset spatio-temporal conformity condition), for example, if $ps$ is 200% of $p$, the corresponding topological connection may be determined as an abnormal topological connection. If $ps$ is less than $p$ (an example of the spatio-temporal conformity not meeting the preset spatio-temporal conformity condition), for example, if $ps$ is 50% of $p$, the corresponding topological connection may also be determined as an abnormal topological connection.

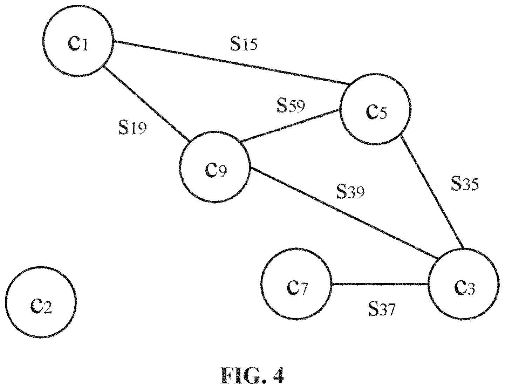

The entity relationship graph may be segmented into multiple relationship sub-graphs by deleting the abnormal topological connection, and the entity images of each relationship sub-graph correspond to the same entity. FIG. 4 illustrates an entity relationship graph with an abnormal topological connection deleted according to an embodiment of the present application. For example, $s_{29}$ and $s_{79}$ are determined as abnormal topological connections according to the comparison result of the spatio-temporal conformity $ps$ with the threshold $p$, and thus, $s_{29}$ and $s_{79}$ are deleted, thereby obtaining two relationship sub-graphs, that is, the entity image of $c_2$ corresponds to one entity while the entity images of the relationship sub-graph constituted by the remaining graph nodes correspond to another entity.

By adopting the above method, abnormal topological connections are excluded according to the spatio-temporal conformity between two topologically connected entity images in the entity relationship graph, and if the spatio-temporal conformity does not meet the preset spatio-temporal conformity condition, the topological connection between the corresponding two entity images is deleted. By deleting abnormal topological connections, the clustering accuracy of entity images is improved, thereby enhancing the clustering effect of the entity images.

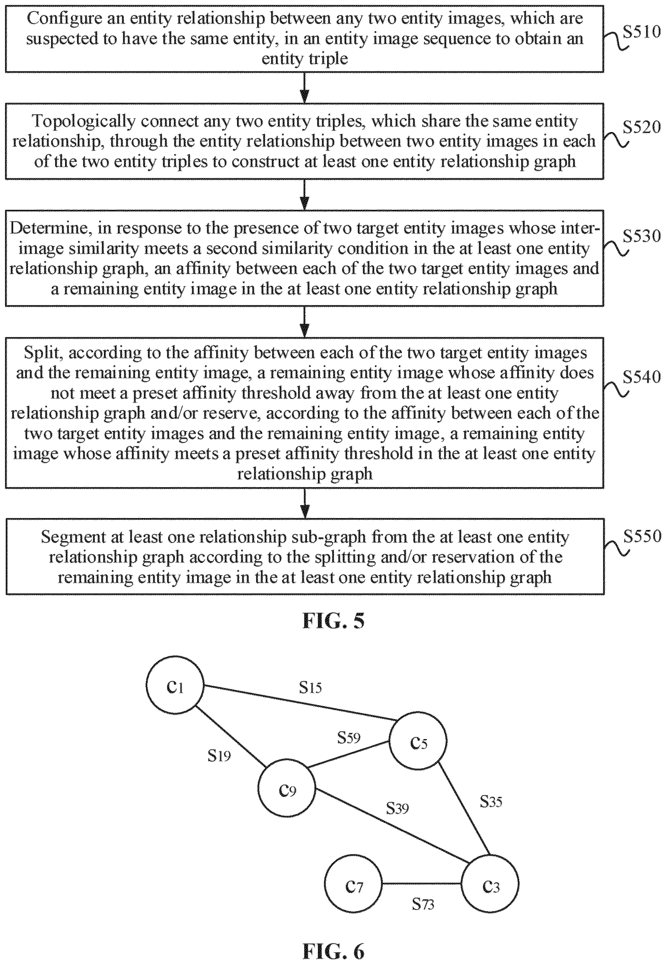

FIG. 5 is a flowchart of another entity image clustering processing method according to an embodiment of the present application. This embodiment of the present application is optimized on the basis of the embodiments described above and may be combined with one or more embodiments described above. As shown in FIG. 5, the entity image clustering processing method in this embodiment of the present application may include S510 to S550.

In S510, an entity relationship is configured between any two entity images, which are suspected to have the same entity, in an entity image sequence to obtain an entity triple.

In S520, any two entity triples sharing the same entity relationship are topologically connected through the entity relationship between two entity images in each of the two entity triples, to construct at least one entity relationship graph.

For the specific implementation processes of S510 and S520, reference may be made to the detailed descriptions in S110 and S120.

In S530, in response to the presence of two target entity images whose inter-image similarity meets a second similarity condition in the at least one entity relationship graph, an affinity between each of the two target entity images and a remaining entity image in the at least one entity relationship graph is determined.

The second similarity condition is used for identifying whether two entity images containing the same entity exist in an entity relationship graph.

In this embodiment, a second similarity threshold $s_2$ is set, and according to the relationship between the inter-image similarity in the entity relationship graph and the second similarity threshold $s_2$, whether to calculate an affinity is determined. The second similarity condition means that the inter-image similarity exceeds the second similarity threshold $s_2$ and is used for identifying whether two entity images containing the same entity exist in an entity relationship graph.

If all inter-image similarities in an entity relationship graph do not exceed $s_2$, that is, when no inter-image similarity meets the second similarity condition, it may be determined that no entity image having the same entity exists in the relationship graph, and thus, no affinity calculation is performed on the entity relationship graph. If a topological connection in which the inter-image similarity is greater than $s_2$ exists, that is, when the second similarity condition is met, the affinity calculation is performed on the entity relationship graph. The two entity images for which the second similarity condition is met are taken as the target entity images, and the affinity between each target entity image and each of the remaining entity images in the entity relationship graph is determined.

FIG. 6 illustrates an entity relationship graph that meets a second similarity condition according to an embodiment of the present application. For example, if the inter-image similarity between the images $c_1$ and $c_9$ is greater than the second similarity threshold $s_2$, that is, when the inter-image similarity meets the second similarity condition, it may be determined that $c_1$ and $c_9$ are entity images acquired from the same entity, and $c_1$ and $c_9$ are taken as the target entity images. Whether $c_3$, $c_5$ and $c_7$ are also the entity images of the same entity to which $c_1$ and $c_9$ belong cannot be explicitly determined through the second similarity condition, and then the affinity may need to be calculated.

In S540, according to the affinity between each of the two target entity images and the remaining entity image, a remaining entity image whose affinity does not meet a preset affinity threshold is split away from the at least one entity relationship graph and/or a remaining entity image whose affinity meets a preset affinity threshold is reserved in the at least one entity relationship graph.

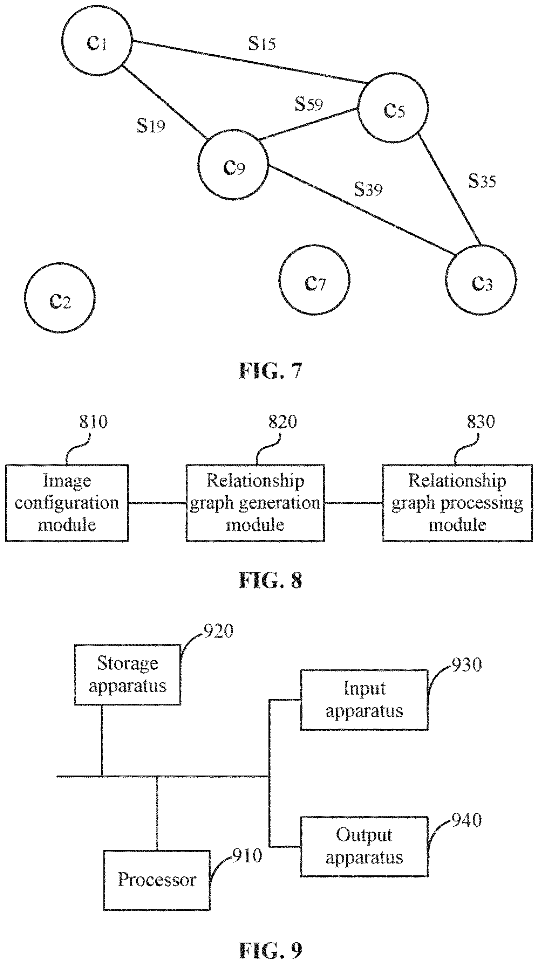

In this embodiment, according to the affinity between the target entity image and the remaining entity image, a remaining entity image in the entity relationship graph whose affinity does not meet the preset affinity threshold is split away, and a remaining entity image in the entity relationship graph whose affinity meets the preset affinity threshold is reserved. For example, an affinity threshold $R_s$ may be set, the calculated affinity between the target entity image and a remaining entity image is compared with the affinity threshold $R_s$, and the remaining entity image whose affinity is less than the preset affinity threshold $R_s$ is split away from the entity relationship graph according to the comparison result. FIG. 7 illustrates a final segmentation diagram of an entity relationship graph according to an embodiment of the present application. For example, the calculated affinities of $c_2$ and $c_7$ are less than the affinity threshold $R_s$, and $c_2$ and $c_7$ each with an affinity less than $R_s$ are deleted from the entity relationship graph. Ultimately, three relationship sub-graphs may be obtained: $c_2$, $c_7$ and a relationship sub-graph composed of the remaining graph nodes, and each of the three relationship sub-graphs contains one entity.

In S550, at least one relationship sub-graph is segmented from the at least one entity relationship graph according to the splitting and/or reservation of the remaining entity image in the at least one entity relationship graph.

In the entity image clustering processing method provided in this embodiment of the present application, the entity images in the entity relationship graph are screened using the set second similarity threshold, and entity images suspected to have the same entity are further screened according to the affinity between entity images, and entity images actually having different entities are deleted from the entity relationship graph, thereby achieving the clustering analysis of entity images, improving the accuracy of clustering and segmentation, and enhancing the clustering effect on entity images.

In one embodiment, the step where an affinity between each target entity image and a remaining entity image in the entity relationship graph is determined may include steps C1 to C3.

In step C1, at least one topological connection path from each target entity image to a remaining entity image in the at least one entity relationship graph and an entity relationship that each topological connection path passes through are determined.

In step C2, the similarity between two entity images corresponding to the entity relationship that each topological connection path passes through is weighted with a weight corresponding to the entity relationship that each topological connection path passes through to obtain the affinity between each target entity image and the remaining entity image in each topological connection path.

In step C3, the affinity between each target entity image and the remaining entity image in the at least one entity relationship graph is determined according to the affinity between the target entity image and the remaining entity image corresponding to the target entity image in the at least one topological connection path.

In this embodiment, the affinity may be calculated through an affinity formula. The affinity calculation formula is

$$R = \sum_{i=1}^{5} Score_i * s_i$$

In the above formula, $R$ denotes an affinity, $i$ denotes the degree of the path between two entity images, where for example, the degree of the topological connection $s_{19}$ that the path from $c_1$ to $c_9$ passes through is 1 and the degree of the topological connections $s_{19}$ and $s_{39}$ that the path from $c_1$ to $c_3$ passes through is 2, $Score_i$ denotes the weight of the topological connection with the degree of $i$, and $S_i$ denotes the similarity between two graph nodes. For example, to calculate the affinity between $c_1$ and $c_7$, the topological connection path from $c_1$ to $c_7$ and the entity relationships that the topological connection path passes through need to be found first. A total of four paths exist from $c_1$ to $c_7$: Path 1: $s_{15} \rightarrow s_{35} \rightarrow s_{73}$; Path 2: $s_{15} \rightarrow s_{59} \rightarrow s_{39} \rightarrow s_{73}$; Path 3: $s_{19} \rightarrow s_{39} \rightarrow s_{73}$; and Path 4: $s_{19} \rightarrow s_{59} \rightarrow s_{35} \rightarrow s_{73}$.

The weight of each degree in the path is set. The weight of each degree is not specifically limited here but needs to meet the condition that the degree is inversely proportional to the weight, that is, the larger the degree is, the smaller the corresponding weight is. For example, the weight of each degree in the path is set as shown in Table 1:

Table 1 Weight of each degree in the path

| Degree | 1 | 2 | 3 | 4 | 5 | 6 | 7 | 8 | 9 | 10 |
|---|---|---|---|---|---|---|---|---|---|---|
| Weight | 10 | 9 | 8 | 7 | 6 | 5 | 4 | 3 | 2 | 1 |

The affinity of each of the four paths is calculated according to the path and the weight of each degree in the path:

$$R_1 = 10 * s_{15} + 9 * s_{35} + 8 * s_{73};$$

$$R_2 = 10 * s_{15} + 9 * s_{59} + 8 * s_{39} + 7 * s_{73};$$

$$R_3 = 10 * s_{19} + 9 * s_{39} + 8 * s_{73};$$

and

$$R_4 = 10 * s_{19} + 9 * s_{59} + 8 * s_{35} + 7 * s_{73}.$$

In the above formulas, $R_i$ denotes the affinity of the $i^{th}$ path. The affinity between $c_1$ and $c_7$ is calculated by performing weighted summation on the affinities of the different paths. Which paths are selected and the weights of the selected paths in the summation are not limited here and may be selected according to the actual situation. For example, when the degree of a path is large, which means that the path needs to pass through many topological connections, the weight corresponding to the degree of the path is small, and then the path may be directly discarded during the calculation of the affinity, that is, a path with a large degree is not involved in the final affinity calculation.

For example, all paths from $c_1$ to $c_7$ are selected, and the affinities in the paths are directly summed to obtain the affinity between $c_1$ and $c_7$: R = $R_1 + R_2 + R_3 + R_4$. In accordance with the above affinity calculation process, the affinities of $c_1$ to $c_3$, $c_1$ to $c_5$, $c_9$ to $c_3$, $c_9$ to $c_5$ and $c_9$ to $c_7$ are calculated to obtain the affinity between each of the target entity images $c_1$ and $c_9$ and each of the remaining entity images $c_3$, $c_5$ and $c_7$.

In the above method, a weight is set for each degree of the path between two entity images in the entity relationship graph, the entity image affinity between a target entity image and a remaining entity image in at least one topological path is calculated, and the affinity between the target entity image to the remaining entity image is obtained by weighting the affinity of the at least one topological path. The path with a large degree may be discarded during the calculation according to the actual requirements to reduce the amount of calculation, thereby improving the calculation speed, shortening the calculation time and improving the calculation efficiency.

FIG. 8 is a block diagram of an entity image clustering processing apparatus according to an embodiment of the present application. In this embodiment, entity images may be clustered according to the similarity and affinity between the entity images. The apparatus may be implemented by software and/or hardware and integrated into an electronic device having a network communication function. As shown in FIG. 8, the entity image clustering processing apparatus in this embodiment of the present application may include an image configuration module 810, a relationship graph generation module 820 and a relationship graph processing module 830.

The image configuration module 810 is configured to configure an entity relationship between any two entity images, which are suspected to have the same entity, in an entity image sequence to obtain an entity triple.

The relationship graph generation module 820 is configured to topologically connect any two entity triples, which share the same entity relationship, through the entity relationship between two entity images in each of the two entity triples to construct at least one entity relationship graph.

The relationship graph processing module 830 is configured to segment at least one relationship sub-graph from the at least one entity relationship graph according to an affinity between entity images in the at least one entity relationship graph, where entity images in each relationship sub-graph correspond to the same entity.

On the basis of the embodiments described above, in one embodiment, the image configuration module 810 is configured to: determine an inter-image similarity between any two entity images in the entity image sequence; and take two entity images whose inter-image similarity meets a first similarity condition as the two entity images suspected to have the same entity, and configure one entity relationship between the two entity images suspected to have the same entity to obtain an entity triple of the two entity images.

The first similarity condition is used for screening out any two entity images that do not contain the same entity.

On the basis of the embodiments described above, in one embodiment, the operation where an inter-image similarity between any two entity images in the entity image sequence is determined includes the following: a feature vector of each entity image in at least one entity image in the entity image sequence is extracted; and a pairwise cross-comparison is performed on the feature vector of each entity image in the at least one entity image, and an image feature similarity between feature vectors of any two entity images is calculated to obtain a feature similarity matrix.

Each element in the feature similarity matrix is a similarity between two entity images.

On the basis of the embodiments described above, in one embodiment, the relationship graph generation module 820 is configured to: determine a spatio-temporal conformity between two topologically connected entity images in the constructed entity relationship graph, where the spatio-temporal conformity is determined through the ratio of an actual acquisition time difference to a theoretical acquisition time difference of two entity images; and delete from the constructed entity relationship graph a topological connection between two entity images whose spatio-temporal conformity does not meet a preset spatio-temporal conformity condition.

On the basis of the embodiments described above, in one embodiment, the operation where a spatio-temporal conformity between two topologically connected entity images in the constructed entity relationship graph is determined includes the following: an actual acquisition time difference of the two topologically connected entity images in the constructed entity relationship graph is determined; a theoretical travel route of an entity in the two topologically connected entity images and a theoretical travel speed of the entity in the two topologically connected entity images are determined; the ratio of a spatial distance of the theoretical travel route of the entity to the theoretical travel speed of the entity is taken as a theoretical acquisition time difference of the two entity images; and the ratio of the actual acquisition time difference to the theoretical acquisition time difference is determined as the spatio-temporal conformity between the two topologically connected entity images.

On the basis of the embodiments described above, in one embodiment, the relationship graph processing module 830 is configured to: in response to the presence of two target entity images whose inter-image similarity meets a second similarity condition in the at least one entity relationship graph, determine an affinity between each of the two target entity images and a remaining entity image in the at least one entity relationship graph; split, according to the affinity between each of the two target entity images and the remaining entity image, a remaining entity image whose affinity does not meet a preset affinity threshold away from the at least one entity relationship graph and/or reserve, according to the affinity between each of the two target entity images and the remaining entity image, a remaining entity image whose affinity meets a preset affinity threshold in the at least one entity relationship graph; and segment the at least one relationship sub-graph from the at least one entity relationship graph according to the splitting and/or reservation of the remaining entity image in the at least one entity relationship graph.

The second similarity condition is used for identifying whether two entity images containing the same entity exist in an entity relationship graph.

On the basis of the embodiments described above, in one embodiment, the operation where an affinity between each target entity image and a remaining entity image in the at least one entity relationship graph is determined includes the following: at least one topological connection path from each target entity image to a remaining entity image in the at least one entity relationship graph and an entity relationship that each topological connection path passes through are determined; the similarity between two entity images corresponding to the entity relationship that each topological connection path passes through is weighted with a weight corresponding to the entity relationship that each topological connection path passes through to obtain an affinity between each target entity image and the remaining entity image in each topological connection path; and the affinity between each target entity image and the remaining entity image in the at least one entity relationship graph is determined according to affinities between the target entity image and the remaining entity image corresponding to the target entity image in the at least one topological connection path.

The entity image clustering processing apparatus provided in this embodiment of the present application may execute the entity image clustering processing method provided in any of the embodiments of the present application and has corresponding function modules and beneficial effects for executing the entity image clustering processing method. For the detailed process, reference may be made to the related operations of the entity image clustering processing method in the embodiments described above.

FIG. 9 is a structure diagram of an electronic device according to an embodiment of the present application. As shown in the structure in FIG. 9, the electronic device provided in this embodiment of the present application includes one or more processing apparatuses (for example, one or more processors 910) and a storage apparatus 920. One or more processors 910 may be included in the electronic device, and one processor 910 is illustrated in FIG. 9 as an example. The storage apparatus 920 is configured to store one or more programs, and the one or more programs are executed by the one or more processors 910 to enable the one or more processors 910 to implement the entity image clustering processing method provided in any of the embodiments of the present application.

The electronic device may further include an input apparatus 930 and an output apparatus 940.

The processor 910, the storage apparatus 920 (for example, a memory), the input apparatus 930 and the output apparatus 940 in the electronic device may be connected via a bus or in other means, and the connection via a bus is illustrated in FIG. 9 as an example.

As a computer-readable storage medium, the storage apparatus 920 in the electronic device may be configured to store one or more programs which may be software programs, computer-executable programs and modules, for example, program instructions/modules corresponding to the entity image clustering processing method in the embodiments of the present application. The processor 910 executes software programs, instructions and modules stored in the storage apparatus 920 to perform various function applications and data processing of the electronic device, that is, to implement the entity image clustering processing method in the method embodiments described above.

The storage apparatus 920 may include a program storage region and a data storage region. The program storage region may store an operating system and an application program required by at least one function. The data storage region may store data created depending on the use of the electronic device. Additionally, the storage apparatus 920 may include a high-speed random-access memory and may further include a non-volatile memory such as at least one magnetic disk memory, a flash memory or another non-volatile solid-state memory. In some examples, the storage apparatus 920 may further include memories which are remotely disposed relative to the processor 910, and these remote memories may be connected to the device via a network. Examples of the network include, but are not limited to, the Internet, an intranet, a local area network, a mobile communication network, and a combination thereof.

The input apparatus 930 may be configured to receive inputted digital or character information and generate key signal input related to user settings and function control of the electronic device. The output apparatus 940 may include a display device such as a display screen.

Moreover, when the one or more programs included in the electronic device are executed by the one or more processors 910, the following operations are performed.

An entity relationship is configured between any two entity images, which are suspected to have the same entity, in an entity image sequence to obtain an entity triple.

Any two entity triples sharing the same entity relationship are topologically connected through the entity relationship between two entity images in each of the two entity triples, to construct at least one entity relationship graph.

At least one relationship sub-graph is segmented from the at least one entity relationship graph according to an affinity between entity images in the at least one entity relationship graph, where entity images in each relationship sub-graph correspond to the same entity.

It is to be understood by those skilled in the art that when the one or more programs included in the electronic device are executed by the one or more processors 910, the related operations of the entity image clustering processing method provided in any of the embodiments of the present application may further be performed.

The embodiments of the present application provide a computer-readable storage medium. The computer-readable storage medium is configured to store computer programs, and the programs, when executed by a processor, cause the processor to perform the entity image clustering processing method. The method includes the following steps.

An entity relationship is configured between any two entity images, which are suspected to have the same entity, in an entity image sequence to obtain an entity triple.

Any two entity triples sharing the same entity relationship are topologically connected through the entity relationship between two entity images in each of the two entity triples, to construct at least one entity relationship graph.

At least one relationship sub-graph is segmented from the at least one entity relationship graph according to an affinity between entity images in the at least one entity relationship graph, where entity images in each relationship sub-graph correspond to the same entity.

In one embodiment, the programs, when executed by a processor, may further cause the processor to perform the entity image clustering processing method provided in any of the embodiments of the present application.

The computer storage medium in the embodiments of the present application may adopt any combination of one or more computer-readable mediums. The computer-readable medium may be a computer-readable signal medium or a computer-readable storage medium. The computer-readable storage medium may be, but is not limited to, an electrical, magnetic, optical, electromagnetic, infrared or semiconductor system, apparatus or device, or any combination thereof. The specific examples (a non-exhaustive list) of the computer-readable storage medium include: an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical memory, a magnetic memory or any suitable combination thereof. The computer-readable storage medium may be any tangible medium that can contain or store a program for use by or in connection with an instruction execution system, apparatus or device.

The storage medium may be a non-transitory storage medium.

The computer-readable signal medium may include a propagated data signal with computer-readable program codes embodied therein, for example, in a baseband or as a part of a carrier wave. The data signal propagated in this way may assume a plurality of forms, including, but not limited to, an electromagnetic signal, an optical signal or any suitable combination thereof. The computer-readable signal medium may be any computer-readable medium that is not a computer-readable storage medium and that can communicate, propagate or transport a program for use by or in connection with an instruction execution system, apparatus or device.

The program codes included on the computer-readable medium may be transmitted via any suitable medium which includes, but is not limited to, a wireless medium, a wire, an optical cable, a radio frequency (RF) or any suitable combination thereof.

Computer program codes for performing the operations of the present application may be written in one or more programming languages or a combination thereof. The programming languages include object-oriented programming languages such as Java, Smalltalk and C++ and may further include conventional procedural programming languages such as the C programming language or similar programming languages. The program codes may be executed entirely on a user computer, partly on a user computer, as a stand-alone software package, partly on a user computer and partly on a remote computer, or entirely on a remote computer or a server. In the scenario involving the remote computer, the remote computer may be connected to the user computer through any type of network, including a local area network (LAN) or a wide area network (WAN), or may be connected to an external computer (for example, through the Internet using an Internet Service Provider).

In the description of the specification, the description of reference terms "one embodiment", "some embodiments", "example", "specific example" or "some examples" means that specific characteristics, structures, materials or features described in connection with the embodiment or the example are included in at least one embodiment or example of the present application. In the specification, the illustrative description of the preceding terms does not necessarily refer to the same embodiment or example. Moreover, the described specific characteristics, structures, materials or features may be combined properly in one or more embodiments or examples.

The above are only some embodiments of the present application and the technical principles used therein. It is to be understood by those skilled in the art that the present application is not limited to the specific embodiments described herein. Those skilled in the art can make various modifications, readjustments and substitutions without departing from the scope of the present application. Therefore, while the present application has been described in detail through the above-mentioned embodiments, the present application is not limited to the above-mentioned embodiments and may include more other equivalent embodiments without departing from the concept of the present application. The scope of the present application is determined by the scope of the appended claims.

## Claims

1. An entity image clustering processing method, comprising:

   configuring an entity relationship between any two entity images, which are suspected to have a same entity, in an entity image sequence to obtain an entity triple;
   topologically connecting any two entity triples, which share a same entity relationship, through an entity relationship between two entity images in each of the two entity triples to construct at least one entity relationship graph; and
   segmenting at least one relationship sub-graph from the at least one entity relationship graph according to an affinity between entity images in the at least one entity relationship graph; wherein entity images in each of the at least one relationship sub-graph correspond to a same entity.

2. The method according to claim 1, wherein the configuring an entity relationship between any two entity images, which are suspected to have a same entity, in an entity image sequence to obtain an entity triple comprises:

determining an inter-image similarity between any two entity images in the entity image sequence; and
taking two entity images whose inter-image similarity meets a first similarity condition as the two entity images suspected to have the same entity, and configuring one entity relationship between the two entity images suspected to have the same entity to obtain an entity triple of the two entity images;
wherein the first similarity condition is used for screening out any two entity images that do not contain a same entity.

3. The method according to claim 2, wherein the determining an inter-image similarity between any two entity images in the entity image sequence comprises:

extracting a feature vector of each entity image in at least one entity image in the entity image sequence; and
performing a pairwise cross-comparison on the feature vector of each entity image in the at least one entity image, and calculating an image feature similarity between feature vectors of any two entity images to obtain a feature similarity matrix;
wherein each element in the feature similarity matrix is a similarity between two entity images.

4. The method according to claim 1, further comprising:

determining a spatio-temporal conformity between two topologically connected entity images in the at least one constructed entity relationship graph; wherein the spatio-temporal conformity is determined through a ratio of an actual acquisition time difference of the two entity images to a theoretical acquisition time difference of the two entity images; and
deleting from the at least one constructed entity relationship graph a topological connection between two entity images whose spatio-temporal conformity does not meet a preset spatio-temporal conformity condition.

5. The method according to claim 4, wherein the determining a spatio-temporal conformity between two topologically connected entity images in the at least one constructed entity relationship graph comprises:

determining an actual acquisition time difference of the two topologically connected entity images in the at least one constructed entity relationship graph;
determining a theoretical travel route of an entity in the two topologically connected entity images and a theoretical travel speed of the entity in the two topologically connected entity images;
taking a ratio of a spatial distance of the theoretical travel route of the entity to the theoretical travel speed of the entity as a theoretical acquisition time difference of the two entity images; and
determining a ratio of the actual acquisition time difference to the theoretical acquisition time difference as the spatio-temporal conformity between the two topologically connected entity images.

6. The method according to claim 1, wherein the segmenting at least one relationship sub-graph from the at least one entity relationship graph according to an affinity between entity images in the at least one entity relationship graph comprises:

determining, in response to a presence of two target entity images whose inter-image similarity meets a second similarity condition in the at least one entity relationship graph, an affinity between each of the two target entity images and a remaining entity image in the at least one entity relationship graph;
splitting, according to the affinity between each of the two target entity images and the remaining entity image, a remaining entity image whose affinity does not meet a preset affinity threshold away from the at least one entity relationship graph and/or, reserving, according to the affinity between each of the two target entity images and the remaining entity image, a remaining entity image whose affinity meets a preset affinity threshold in the at least one entity relationship graph; and
segmenting the at least one relationship sub-graph from the at least one entity relationship graph according to splitting and/or reservation of the remaining entity image in the at least one entity relationship graph;
wherein the second similarity condition is used for identifying whether two entity images containing a same entity exist in an entity relationship graph.

7. The method according to claim 6, wherein the determining an affinity between each of the two target entity images and a remaining entity image in the at least one entity relationship graph comprises:

determining at least one topological connection path from each target entity image to the remaining entity image in the at least one entity relationship graph and an entity relationship that each of the at least one topological connection path passes through;

weighting a similarity between two entity images corresponding to the entity relationship that each of the at least one topological connection path passes through with a weight corresponding to the entity relationship that each of the at least one topological connection path passes through, to obtain an affinity between each target entity image and the remaining entity image in each of the at least one topological connection path; and

determining the affinity between each target entity image and the remaining entity image in the at least one entity relationship graph according to affinities between each target entity image and the remaining entity image corresponding to the target entity image in the at least one topological connection path.

8. An entity image clustering processing apparatus, comprising:

an image configuration module, configured to configure an entity relationship between any two entity images, which are suspected to have a same entity, in an entity image sequence to obtain an entity triple;

a relationship graph generation module, configured to topologically connect any two entity triples, which share a same entity relationship, through an entity relationship between two entity images in each of the two entity triples to construct at least one entity relationship graph; and

a relationship graph processing module, configured to segment at least one relationship sub-graph from the at least one entity relationship graph according to an affinity between entity images in the at least one entity relationship graph; wherein entity images in each of the at least one relationship sub-graph correspond to a same entity.

9. An electronic device, comprising:

at least one processor; and

a storage apparatus, configured to store at least one program;

wherein the at least one program, when executed by the at least one processor, causes the at least one processor to implement the entity image clustering processing method according to any one of claims 1 to 7.

10. A computer-readable storage medium storing a computer program, wherein the computer program, when executed by a processor, causes the processor to implement the entity image clustering processing method according to any one of claims 1 to 7.

Configure an entity relationship between any two entity images, which are suspected to have the same entity, in an entity image sequence to obtain an entity triple

~S110

Topologically connect any two entity triples, which share the same entity relationship, through the entity relationship between two entity images in each of the two entity triples to construct at least one entity relationship graph

~S120

Segment at least one relationship sub-graph from the at least one entity relationship graph according to an affinity between entity images in the at least one entity relationship graph, where entity images in each relationship sub-graph correspond to the same entity

~S130

**FIG. 1**

$C_i$ —— $S_{ij}$ —— $C_j$

**FIG. 2**

$C_1$

$S_{15}$

$S_{19}$

$S_{59}$  $C_5$

$C_9$

$S_{29}$

$S_{39}$  $S_{35}$

$S_{79}$

$C_2$

$C_7$  $C_3$

$S_{37}$

**FIG. 3**

**FIG. 4**

Configure an entity relationship between any two entity images, which are suspected to have the same entity, in an entity image sequence to obtain an entity triple ⟶ S510

Topologically connect any two entity triples, which share the same entity relationship, through the entity relationship between two entity images in each of the two entity triples to construct at least one entity relationship graph ⟶ S520

Determine, in response to the presence of two target entity images whose inter-image similarity meets a second similarity condition in the at least one entity relationship graph, an affinity between each of the two target entity images and a remaining entity image in the at least one entity relationship graph ⟶ S530

Split, according to the affinity between each of the two target entity images and the remaining entity image, a remaining entity image whose affinity does not meet a preset affinity threshold away from the at least one entity relationship graph and/or reserve, according to the affinity between each of the two target entity images and the remaining entity image, a remaining entity image whose affinity meets a preset affinity threshold in the at least one entity relationship graph ⟶ S540

Segment at least one relationship sub-graph from the at least one entity relationship graph according to the splitting and/or reservation of the remaining entity image in the at least one entity relationship graph ⟶ S550

**FIG. 5**

**FIG. 6**

**FIG. 7**

**FIG. 8**

**FIG. 9**

## INTERNATIONAL SEARCH REPORT

| International application No. |
| --- |
| **PCT/CN2022/105891** |

| A. | CLASSIFICATION OF SUBJECT MATTER |
| --- | --- |

G06F 16/36(2019.01)i

According to International Patent Classification (IPC) or to both national classification and IPC

| B. | FIELDS SEARCHED |
| --- | --- |

Minimum documentation searched (classification system followed by classification symbols)

G06F,; G06K

Documentation searched other than minimum documentation to the extent that such documents are included in the fields searched

Electronic data base consulted during the international search (name of data base and, where practicable, search terms used)

CNTXT , CNKI, DWPI, ENTXT, ENTXTC, WPABS, IEEE, CNABS: 图像, 实体, 三元组, 图谱, 亲密度, 子图谱, 相似, 时间差, 拓扑, 聚类, image, entity, triple, map, affinity, sub-map, similarity, time difference, topology, clustering

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 111743574 A (NORTHWESTERN POLYTECHNIC UNIVERSITY) 09 October 2020 (2020-10-09) claim 1, description, paragraphs 5-39, and figure 1 | 1-3, 8-10 |
| Y | CN 112966122 A (PING AN TECHNOLOGY (SHENZHEN) CO., LTD.) 15 June 2021 (2021-06-15) claims 1-10, description, paragraphs 38-112, and figures 1-3 | 1-3, 8-10 |
| A | CN 109753570 A (SUN YAT-SEN UNIVERSITY) 14 May 2019 (2019-05-14) entire document | 1-10 |
| A | US 2020073932 A1 (INTELLIGENT FUSION TECHNOLOGY INC.) 05 March 2020 (2020-03-05) entire document | 1-10 |
| A | CN 109800317 A (SUN YAT-SEN UNIVERSITY) 24 May 2019 (2019-05-24) entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 September 2022** | **21 September 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/105891**

| Patent document cited in search report | | | Publication date (day/month/year) | Patent family member(s) | | | Publication date (day/month/year) |
|---|---|---|---|---|---|---|---|
| CN | 111743574 | A | 09 October 2020 | None | | | |
| CN | 112966122 | A | 15 June 2021 | None | | | |
| CN | 109753570 | A | 14 May 2019 | None | | | |
| US | 2020073932 | A1 | 05 March 2020 | US | 10679007 | B2 | 09 June 2020 |
| CN | 109800317 | A | 24 May 2019 | CN | 109800317 | B | 11 March 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111458493X